# EUROPÄISCHE PATENTSCHRIFT

(11) **EP 1 050 034 B1**
(45) Veröffentlichungstag und Bekanntmachung des Hinweises auf die Patenterteilung: **03.11.2004**
(21) Anmeldenummer: 99939940.5
(22) Anmeldetag: 24.06.1999
(51) Int. Cl.: G08G 1/0968, G01S 5/14, G01C 21/20

(54) **VORRICHTUNG ZUR STEUERUNG UND ÜBERWACHUNG EINES FAHRZEUGES**
DEVICE FOR CONTROLLING AND MONITORING A VEHICLE
DISPOSITIF DE COMMANDE ET DE SURVEILLANCE D'UN VEHICULE

(30) Priorität: 28.08.1998 DE 19839193
(43) Veröffentlichungstag der Anmeldung: 08.11.2000
(73) Patentinhaber: ROBERT BOSCH GMBH, 70442 Stuttgart (DE)
(72) Erfinder: OTTO, Stefan, D-30853 Langenhagen (DE)
(86) Internationale Anmeldenummer: PCT/DE1999/001837
(87) Internationale Veröffentlichungsnummer: WO 2000/013157

(56) Entgegenhaltungen:
- EP-A- 0 523 860
- EP-A- 0 565 191

## Beschreibung

Die Erfindung geht aus von der Gattung, wie sie im unabhängigen Patentanspruch 1 angegeben ist.

In Fahrzeugen, wie insbesondere Kraftfahrzeugen, ist es bekannt, zur Erhöhung der Verkehrssicherheit und zur Verbesserung des Fahrkomforts dem Fahrer eine automatische Standortangabe und Navigationshilfe zu einem gewünschten Ziel anzubieten. Die Werte für die Standortbestimmung werden zum Beispiel von einem Satelliten-Navigationssystem GPS (global positioning system) geliefert. Zusätzlich sind, insbesondere für die Navigationshilfe, im Fahrzeug Sensoren oder Geber vorgesehen, die Daten über das Fahrzeug liefern wie Raddrehzahl, zurückgelegte Fahrstrecke oder gefahrene Kurven.

Es ist andererseits auch bekannt, im Fahrzeug unabhängig von einer Standortbestimmung oder Navigationshilfe mit Sensoren oder Gebern Daten über Betriebszustände des Fahrzeuges wie zum Beispiel Tankinhalt, Geschwindigkeit und Temperaturen zu ermitteln und für eine Anzeige, eine Warnung oder sonstige Maßnahmen zu verwenden.

Diese beiden Systeme, nämlich das erste System für die Standortbestimmung und die Navigationshilfe einerseits und das zweite System zur Ermittlung von Daten über technische Betriebszustände des Fahrzeugs andererseits, arbeiten in der Regel unabhängig voneinander, zumal viele Kraftfahrzeuge wohl mit dem zweiten System, nicht aber mit dem ersten System ausgerüstet sind. Die gleichzeitige Anwendung beider Systeme in einem Kraftfahrzeug stellt einen nennenswerten Aufwand hinsichtlich Komponenten, Raumbedarf und Stromverbrauch dar.

Aus der EP 565 191 A2 ist eine Anordnung zur Positionsbestimmung eines Landfahrzeugs bekannt, bei der zur Positionsbestimmung ein GPS-Empfänger, ein Kompass und wenigstens ein Radsensor mit einer Korrektureinheit vorgesehen sind. Die aus der Koppelortung gewonnenen Daten werden zur Korrektur der Daten des GPS-Empfängers verwendet.

Aus der EP 523 860 A2 ist ebenfalls eine Ortungseinheit bekannt, bei der sowohl Positions-, als auch Richtungsfehler von Sensoren mittels eines GPS-Empfängers korrigiert werden.

### Vorteile der Erfindung

Die Erfindung betrifft eine Vorrichtung zur Steuerung und Überwachung eines Fahrzeugs mit einem ersten und wenigstens einem zweiten System jeweils zur Auswertung von Daten, wie Radio-Fahrerinformationen im Sinne einer Standortbestimmung und/oder Navigationshilfe, technischen Betriebszuständen des Fahrzeugs oder weitere Telematikdaten.

Der Anmeldungsgegenstand mit den Merkmalen des Patentanspruchs 1 hat folgende Vorteile: Durch die gemeinsame Ausnutzung der Sensoren oder Geber für wenigstens zwei Systeme werden eine Verringerung der Anzahl an Komponenten und eine Kostenreduzierung erreicht. Ebenso können Daten, die an sich nur in einem der Systeme gewonnen und verwertet werden, zusätzlich in dem anderen System oder den anderen Systemen ausgewertet und für verschiedene neuartige Funktionen oder Zwecke verwendet werden, ohne dass dafür zusätzliche Sensoren oder Geber für diese Daten notwendig sind. Es werden also mit geringem Aufwand in mehreren Systemen neuartige Funktionen erschlossen, die insbesondere der Verkehrssicherheit und der Entlastung des Fahrers dienen. Neben den bisher üblichen Systemen gilt dies auch für weitere künftige Systeme, die verkehrsspezifische Telematikdaten liefern. Telematik ist ein aus den Begriffen Telekommunikation und Informatik gebildeter Begriff für das Fachgebiet der Informatik, das sich mit dem Einsatz informatischer Komponenten, Verfahren und Systeme in der digitalen Telekommunikation befasst.

Vorteilhafte Weiterbildungen der Erfindung sind in den abhängigen Ansprüchen angegeben.

In der folgenden Beschreibung und der Zeichnung haben die verwendeten Symbole und Abkürzungen folgende Bedeutung:
- ABS: Anti Blockier System
- CAN: Contoller Area Network
- FIS: Fahrer Informations Systeme
- FS: Fahrstrecke
- GALA: Geschwindigkeitsabhängige Lautstärkeanpassung
- GPS: global positioning system = Satelliten-Navigationssystem
- KF: Komfortfunktionen
- MF: Mobilfunk
- NAV: Navigation
- S: Sensorik für Daten
- TIM: Trafic-Information-Memory
- TK: Tank
- TBF: technische Betriebszustände des Fahrzeugs
- VF: Fahrgeschwindigkeit des Fahrzeugs

Bei der Erfindung wird somit die Tatsache vorteilhaft ausgenutzt, daß eine Reihe vom im Fahrzeug ermittelten Daten wie zum Beispiel Raddrehzahl, Geschwindigkeit oder Tankfüllung, nicht nur für die Anzeige von technischen Betriebszuständen des Fahrzeugs gemäß dem genannten zweiten System, sondern auch für die Standortbestimmung und die Navigationshilfe gemäß dem genannten ersten System notwendig oder zur Realisierung neuartiger Dienste und Erleichterungen für den Fahrer zusätzlich einsetzbar sind. In umgekehrter Richtung gibt es in dem ersten System Daten wie zum Beispiel über den Streckenzustand, Fahrtroute und Wetterbedingungen, die zur Beeinflussung von technischen Betriebszuständen im Fahrzeug nützlich sein können. Dadurch kann eine Anpassung des Fahrzeugs oder der Fahrweise an die jeweiligen Umstände ausgelöst werden. Diese Anpassung kann über den Fahrer erfolgen, dem über eine Anzeige eine Empfehlung gegeben wird, die er dann ausführt. Die Anpassung kann auch automatisch ohne Einschluß des Fahrers erfolgen, indem zum Beispiel bei Nebel automatisch eine Nebelschlußleuchte eingeschaltet wird. In beiden Fällen werden somit in einem System benötigte neue Daten nicht mit zusätzlichen Sensoren oder Gebern erzeugt, sondern im Sinne eines Datenaustauschs von dem anderen System bezogen. Jedes Datum braucht somit nur einmal mit einem Sensor oder Geber erzeugt zu werden.

Eine erste Ausführungsform der Erfindung geht aus von einem Fahrzeug, in dem in dem ersten System mit einer ersten Gruppe von Sensoren oder Gebern und in dem zweiten oder weiteren System mit einer zweiten oder weiteren Gruppe von Sensoren oder Gebern jeweils Daten ermittelt werden und einige Daten in beiden oder mehreren Systemen gleich sind. Dann wird durch die Zusammenfassung von Sensor oder Geber der beiden oder weiteren Systeme für dasselbe Datum zu einem Sensor oder Geber, der für beide oder weitere Systeme wirksam ist, eine Kostenreduzierung erreicht. Aus Vereinfachungsgründen beziehen sich die nachfolgenden Ausführungen nur auf zwei Systeme. In der folgenden Tabelle 1 sind Beispiele für derartige, in wenigstens zwei Systemen verwertete Daten dargestellt. Es ist zu erkennen, dass die jeweils von einem Sensor oder Geber gelieferten Daten in beiden Systemen für zum Teil recht unterschiedliche Funktionen und Zwecke ausgewertet und eingesetzt werden.

Zusätzliche Funktionen bestehen in einer optischen Anzeige, einer akustischen Information, einer Reaktion des Fahrzeugs, einer Umschaltung im Fahrzeug, einer Anpassung der Fahrweise und dergleichen.

**Tabelle 1**

| Daten / Info | 1. System Radio / FIS | 2. System TBF |
|---|---|---|
| GPS-Empfänger | Navigation | neue Telematikfunktionen (z.B. Ortung eines gestohlenen Fahrzeugs) |
| Geschwindigkeit | Navigation, GALA, Sperrung / Freigabe von Benutzereingaben oder Anzeigen | Anzeige |
| Radimpulse | Navigation | Geschwindigkeitsmessung oder ABS |
| Rückwärtsgang eingelegt | Navigation | Anzeige oder Getriebesteuerung |
| Heckscheibenheizung eingeschaltet | Navigation | Anzeige |
| Mobilfunk- bzw. Mobiltelefonempfänger | Telematik | Mobiltelefon und neue Telematikfunktionen (s.o.) |
| Motordrehzahl | GALA | Anzeige, Drehzahlbegrenzung |
| Licht eingeschaltet | Beleuchtung, Tag-/Nachtdesign | Beleuchtung, Anzeige oder Warnsummer |
| Zündschlüssel gesteckt | Weckeingang | Weckeingang |
| Zündung eingeschaltet | Weckeingang | Weckeingang, Anzeige |
| Uhrzeit, Funkuhr | TIM-Meldungen, Berechnung der geschätzten Ankunftzeit, Selektion von relevanten Verkehrsmeldungen, Einfluß auf die Routenwahl (z. B. ist die Verkehrsdichte oft zeitabhängig) | Anzeige, zeitgesteuerte Funktionen (z. B. Einschalten der Standheizung / Klimaanlage) |
| Fahrzeugspezifische Daten, wie Bereifung (z. B. Luftdruck, Größe, Typ) | Navigation | Luftdruck, Fahrwerkabstimmung |

Eine zweite Ausführungsform der Erfindung geht davon aus, daß in dem zweiten System Daten ermittelt und verwertet werden, die im ersten System nicht vorhanden sind. Dann werden die im zweiten System vorhandenen Daten zusätzlich dem ersten System zur Verwertung zugeführt. Diese Ausführungsform bringt weniger eine Kostenverringerung. Der Vorteil besteht darin, daß im ersten System, also in der Standortbestimmung und der Navigationshilfe, neue Funktionen und Möglichkeiten erschlossen werden, ohne daß dafür im ersten System zusätzliche Sensoren oder Geber benötigt werden. Beispiele für diese Ausführungsform sind in der folgen den Tabelle 2 dargestellt.

**Tabelle 2**

| 2. System Fahrzeug-Daten TBF | 1. System Radio / FIS NAV |
|---|---|
| Fahrzeugstörungen, z.B. Hydraulik- / Bremsflüssigkeits-Defekt, Bremsbelagstärke zu gering, Öldruckfehler, Motortemperatur-Fehler, usw. | Automatische Anzeige von Werkstätten bzw. Zielführung dorthin, ggf als Zwischenziel |
| Servicestörungen, z.B. Tank leer, Waschwasser leer, usw. | Automatische Anzeige von Tankstellen bzw. Zielführung dorthin, ggf als Zwischenziel |
| Berechnete Reichweite | Einfluß auf die Routenwahl oder auf den Vorschlag von Zwischenzielen (Tankstellen) |
| Uhrzeit, Funkuhr | TIM-Meldungen, Berechnung der geschätzten Ankunftszeit, Selektion von relevanten Verkehrsmeldungen, Einfluß auf die Routenwahl (z. B. ist die Verkehrsdichte oft zeitabhängig) |
| Bisherige Fahrt / Standzeiten (Ruhepausen) | Einfluß auf die Routenwahl oder auf den Vorschlag von Zwischenzielen (Raststätten, Motels, Hotels) |
| Variable Fahrzeugdaten, wie Fahrt mit Anhänger, Fahrt mit Dachgepäckträger | Einfluß auf die Routenwahl, da dies mit einer Geschwindigkeitsbegrenzung oder einer Sperrung / Freigabe für bestimmte Straßenabschnitte einhergehen kann (z. B. Sperrung für Anhänger oder Mindestgeschwindigkeit nicht erreichbar) |
| Konstante Fahrzeugdaten, wie Abmessungen, zulässiges Gesamtgewicht, Fahrzeugart (z. B. LKW), zulässige oder tatsächliche Höchstgeschwindigkeit | Einfluß auf die Routenwahl, da dies mit einer Geschwindigkeitsbegrenzung oder einer Sperrung / Freigabe für bestimmte Straßenabschnitte einhergehen kann (z. B. Sperrung für Brükken oder Unterführungen) |

Die Tabelle zeigt verschiedene Daten, die nur im zweiten System gewonnen werden und an sich nur technische Betriebszustände des Fahrzeugs betreffen. Diese Daten werden nun zusätzlich im ersten System für sich daraus ergebende Anzeigen, Empfehlungen, Fahrtroutenänderungen, Abhilfemaßnahmen und dergl. verwendet.

Eine dritte Ausführungsform der Erfindung besteht darin, daß nur im ersten System gewonnene und verwertete Daten zusätzlich im zweiten System verwertet werden. Das ist sinnvoll, wenn aufgrund von besonderen Umständen in der Navigation technische Maßnahmen im Fahrzeug notwendig oder zweckmäßig sind, eine Erleichterung für den Fahrer darstellen oder eine Anpassung der Fahrzeugfunktionen an die Navigationsumstände bewirken, die zum Beispiel ein unerfahrener Fahrer nicht kennt oder vergißt. Beispiele dafür sind in der folgenden Tabelle 3 dargestellt.

**Tabelle 3**

| 1. System NAV Radio / FIS | 2. System TBF Fahrzeug-Daten |
|---|---|
| Standort, Strecken-/ Straßenzustand, Stau-, Nebel-, Glatteiswarnungen | Wahl der Geschwindigkeit / Geschwindigkeitsgrenzen (z.B. innerorts über Tempomat), Einstellung der Fahrwerkabstimmung bzw. Reifendruck (z. B. bei schlechten Wegstrecken), Einstellung des Getriebes (z. B. bei Steigungen), Einstellung der Anti-Schlupf-Regelung (z. B. bei Glatteis), Schalten des Standlichtes (z. B. automatisches Einschalten während der Fahrt in skandinavischen Ländern), Schalten des Fahrlichtes oder Abblendlichtes (z. B. automatisches Schalten Einschalten in Tunneln und Parkgaragen), Schalten des Fernlichtes (z. B. automatisches Abschalten innerorts), Schalten der Nebelschlußleuchte / Nebelscheinwerfer (z. B. automatisch gemäß Sichtverhältnissen) |
| Route | Schalten des Fahrtrichtungsanzeigers (z. B. automatisch vor dem Abbiegen) |
| Höhe über N.N. | Einstellung der Motorabstimmung |

Vorzugsweise ist die Verknüpfung der beiden Systeme so ausgebildet, daß ein im zweiten System ermittelter Daten über einen Betriebszustand des Fahrzeugs im ersten System eine sich daraus ergebende, im funktionellen oder logischen Zusammenhang stehende oder hilfreiche Anzeige für die Navigation auslöst. Zum Beispiel kann der im zweiten System ermittelte zur Neige gehende Benzinvorrat im ersten System eine Navigationsanzeige zu der nächstgelegenen oder noch erreichbaren Tankstelle auslösen.

Ebenso kann die Verknüpfung der beiden Systeme so ausgebildet sein, daß ein im ersten System ermittelter Zustand betreffend die Navigation automatisch im zweiten System eine sich daraus ergebende, notwendige oder zweckmäßige Maßnahme für den technischen Betriebszustand des Fahrzeugs auslöst. Zum Beispiel kann, wenn im ersten System das Befahren einer Straße ermittelt wird, bei der eine Geschwindigkeitsbegrenzung besteht, das erste System so auf einen Tempomaten im zweiten System einwirken, daß die Höchstgeschwindigkeit des Fahrzeugs automatisch auf die maximal zulässige Geschwindigkeit begrenzt wird.

### Zeichnungen

Die Erfindung wird im folgenden ergänzend anhand der beigefügten Zeichnung erläutert. Darin zeigen
Figur 1, 2 eine erfindungsgemäß ausgebildete Vorrichtung gemäß der ersten Ausführungsform der Erfindung,
Figur 3, 4 eine erfindungsgemäß ausgebildete Vorrichtung gemäß der zweiten Ausführungsform der Erfindung,
Figur 5, 6 eine erfindungsgemäß ausgebildete Vorrichtung gemäß der dritten Ausführungsform der Erfindung,
Figur 7, 8 ein Beispiel für eine neue Funktionalität mit Einbindung von Servicestörungen in das Navigationssystem,
Figur 9-11 ein weiteres Beispiel, das zeitlich auf das Beispiel gemäß den Figuren 7, 8 folgen kann und
Figur 12 ein Blockbild zur Erläuterung der Verknüpfung der einzelnen Komponenten über Bussysteme.

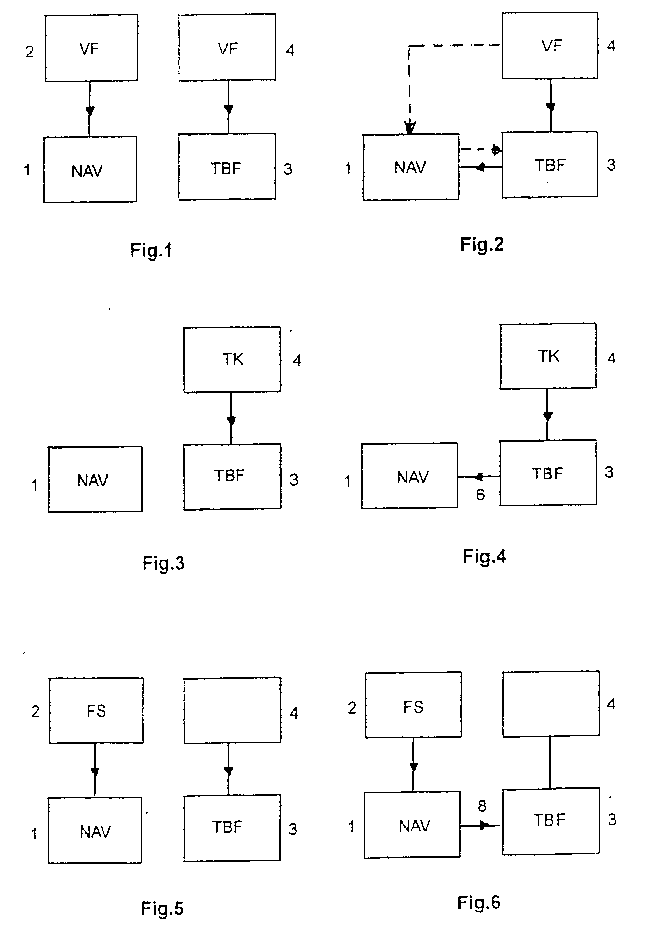

In Figur 1 wird eine Auswerteinheit 1 für die Navigation NAV von einem Geber 2 für die Fahrzeuggeschwindigkeit VF gesteuert. Die Blöcke 1 und 2 stellen also das genannte erste System dar. Eine Auswerteinheit 3 für Fahrzeugfunktionen TBF wird von einem Geber 4 für die Fahrzeuggeschwindigkeit VF gesteuert. Die Stufen 3, 4 stellen also das beschriebene zweite System dar. Diese beiden Systeme für die Navigation und die Fahrzeugfunktionen arbeiten also unabhängig voneinander.

In Figur 2 arbeiten die Stufen 3, 4 wie in Figur 1. Der Geber 2 von Figur 1 ist indessen nicht mehr vorhanden. Stattdessen werden die Daten von dem Geber 4 von der Auswerteinheit 3 zu der Stufe 1 für die Navigation NAV weitergeleitet. Die gestrichelte Darstellung zeigt auch die andere mögliche Alternative, bei der die Daten von dem Geber 4 von einer Auswerteeinheit 1 zu der Stufe 3 für die TBF weitergeleitet werden. Es ist ersichtlich, daß in der Ausführung gemäß Figur 2 der Geber 2 entfällt, wodurch eine Einsparung an Kosten und Raumbedarf erzielt wird. Die Figuren 1, 2 entsprechen somit der beschriebenen ersten Ausführungsform der Erfindung. Im Gegensatz zu Figur 1 sind also in Figur 2 die beiden Systeme miteinander verknüpft, indem ein Datenaustausch zwischen der Auswerteinheit 3 im zweiten System und der Auswerteinheit 1 im ersten System erfolgt.

In Figur 3 wird die Auswerteinheit 3 für die Fahrzeugfunktionen von dem Geber 4 für die Tankfüllung TK gesteuert. Gemäß Figur 4 ist ein Ausgang der Auswerteinheit 3 mit einem Eingang der Auswerteinheit 1 verbunden. Die Daten über die Tankfüllung, die an sich nur für die Einheit 3 vorgesehen sind, werden also zu der Einheit 1 weitergeleitet. Dort können diese Daten für weitere Funktionen zusätzlich ausgenutzt werden, ohne daß die Einheit 1 dafür zusätzliche Geber benötigt. Auch hier erfolgt wieder ein Datenaustausch zwischen der Auswerteinheit 3 und der Auswerteinheit 1. Dabei werden jedoch im Gegensatz zu Figur 1, 2 der Auswerteinheit 1 Daten zugeführt, die sonst in der Auswerteinheit 1 nicht vorhanden sind und somit neue Funktionen im ersten System ermöglichen. Die Figuren 3, 4 stellen also eine Ausführung der beschriebenen zweiten Ausführungsform der Erfindung dar.

In Figur 5 wird die Einheit 1 für die Navigation NAV von einem Geber 2 für die Fahrstrecke FS gesteuert, während die Einheit 3 für die Fahrzeugfunktionen und der Geber 4 unabhängig davon arbeiten. Figur 6 zeigt an sich den gleichen Aufbau wie Figur 5. Jedoch werden die von dem Geber 2 stammenden Daten von der Stufe 1 über die Leitung 8 zusätzlich der Einheit 3 für die Fahrzeugfunktion zugeführt. Dadurch können Fahrzeugfunktionen in Abhängigkeit von bestimmten Umständen der Fahrtroute gesteuert werden, wie es in der Tabelle 3 bereits dargestellt ist.

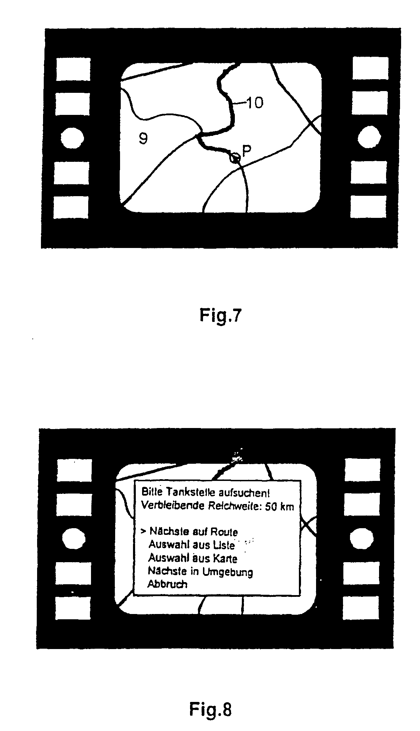

In Figur 7 wird während einer Zielführung oder Navigation auf der Karte 9 die aktuelle Fahrzeugposition P durch ein Dreieck und die dem Fahrer empfohlene Fahrtroute durch die dicker gezeichnete Straßenführung 10 angezeigt. Es sei angenommen, daß während der Fahrt der Kraftstoffvorrat langsam zur Neige geht. Bei einem bestimmten Restvorrat, ermittelt durch einen Geber im zweiten System, erscheint ein Hinweis mit verschiedenen Auswahlmöglichkeiten im Sinne des ersten Systems.

Figur 8 zeigt einen derartigen Hinweis mit verschiedenen Optionen, die sich aus dem bevorstehenden Kraftstoffmangel ergeben. Der Menüpunkt "Nächste auf Route" kann vorzugsweise gewählt werden, wenn der Fahrer keinen Umweg in Kauf nehmen will. Die Option "Auswahl aus Liste" eignet sich insbesondere, wenn bestimmte Tankstellenketten bevorzugt werden. Bei der Option "Auswahl aus Karte" läßt sich eine beliebige angezeigte Tankstelle auswählen. Ist der Kraftstoffvorrat so gering, daß eine Panne befürchtet werden muß, kann "Nächste in Umgebung" gewählt werden. Es sei angenommen, daß in diesem Beispiel als Option "Nächste auf Route" gewählt wurde, so daß die nächste Tankstelle auf der ursprünglich geplanten Route als Zwischenziel angezeigt wird.

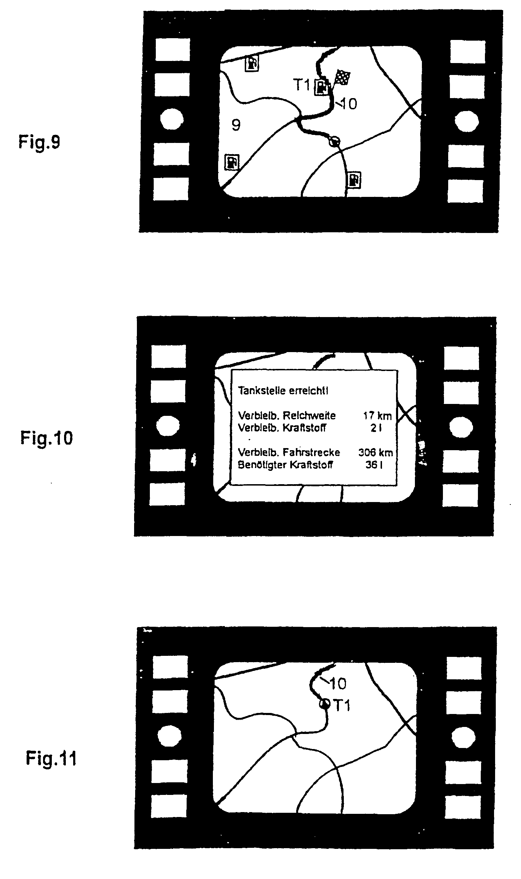

Figur 9 zeigt die Karte 9 mit der eingeblendeten gewählten Tankstelle T1. Darüberhinaus werden hier als Zusatzinformation auch andere Tankstellen in der Umgebung eingeblendet. Kurz vor dem Erreichen der Tankstelle erscheint eine Hinweismaske, aus der verschiedene Tankinformationen hervorgehen.

Figur 10 zeigt eine derartige Hinweismaske mit verschiedenen Daten, die für den Tankvorgang nützlich sind. Der Fahrer kann zum Beispiel entscheiden, ob vollgetankt oder nur eine bestimmte Menge nachgefüllt wird, unter Berücksichtigung der noch zu fahrenden Strecke, der vorhandenen Geldmittel und dergl.

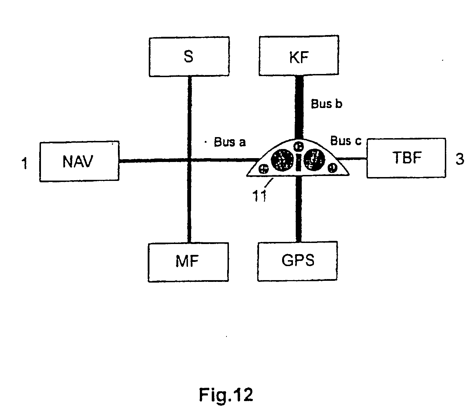

Figur 11 zeigt, daß nach dem Tanken die geplante Zielführung entsprechend der dick gezeichneten Straßenführung 10 fortgesetzt wird.

Figur 12 zeigt ein Beispiel für eine schaltungsmäßige Verknüpfung der beschriebenen Komponenten über Bussysteme. Dargestellt sind die die Daten liefernde Sensorik S, eine Stufe für Komfortfunktionen KF, die Auswerteinheit 1 für Radio/Navigation NAV gemäß dem genannten ersten System, die Auswerteinheit 3 für Fahrzeuginformationen TBF gemäß dem genannten zweiten System, eine Mobilfunkstufe MF, ein GPS-Geber und ein sogenanntes Kombiinstrument 11 zur optischen Anzeige verschiedener Daten. Die optische Anzeige für den Fahrer kann für bestimmte Daten auch durch eine akustische Information ergänzt oder ersetzt werden. Die Verbindung der Komponenten kann in vorteilhafter Weise über den oft schon vorhandenen sogenannten CAN-Bus erfolgen. Gegebenenfalls können Umsetzer zwischen mehreren vorhandenen Bussystemen wie zum Beispiel Innenraum-, Motor-, Komfortbus eingesetzt werden.

## Patentansprüche

1. Vorrichtung zur Steuerung und Überwachung eines Fahrzeugs mit einem ersten System und wenigstens einem zweiten System jeweils zur Auswertung von Daten, wobei das erste System eine Auswerteeinheit für eine Navigation (1) und das zweite System eine Auswerteeinheit für Fahrzeugfunktionen (3) beinhaltet,
**dadurch gekennzeichnet, dass**
die Systeme derart miteinander verknüpft sind, dass die von einem einzigen Geber (4) gelieferten Daten in beiden Systemen für unterschiedliche Zwecke ausgewertet werden.

2. Vorrichtung nach Anspruch 1,
**dadurch gekennzeichnet, dass** Daten, die sowohl in dem ersten System als auch in dem zweiten System verwertet werden, von dem Geber (4) einer Auswerteinheit (1) im ersten System und einer Auswerteinheit (3) im zweiten System zugeführt werden.

3. Vorrichtung nach Anspruch 1,
**dadurch gekennzeichnet, dass** Daten, die technische Betriebszustände des Fahrzeugs betreffen und an sich nur im zweiten System ausgewertet werden, zusätzlich einer Auswerteinheit (1) im ersten System zugeführt werden und dort Funktionen zur Standortbestimmung und/oder Navigationshilfe auslösen.

4. Vorrichtung nach Anspruch 1,
**dadurch gekennzeichnet, dass** Daten, die Radio-Fahrerinformationen für eine Standortbestimmung und/oder Navigationshilfe betreffen und an sich nur im ersten System verwertet werden, zusätzlich einer Auswerteinheit (3) im zweiten System zugeführt werden und dort Funktionen für technische Betriebszustände des Fahrzeugs auslösen.

5. Vorrichtung nach Anspruch 3 oder 4,
**gekennzeichnet durch** eine optische Anzeige zur Anzeige der ausgewerteten Daten.

6. Vorrichtung nach Anspruch 2, 3 oder 4,
**dadurch gekennzeichnet, dass** der Geber (4) mit einer Daten-Auswerteinheit (3) in einem der Systeme und ein das Datum führender Ausgang dieser Auswerteinheit (3) mit einer Daten-Auswerteinheit (1) in dem anderen System verbunden ist.

7. Vorrichtung nach Anspruch 2, 3 oder 4,
**dadurch gekennzeichnet, dass** der Geber (4) parallel mit den Eingängen von zwei Daten-Auswerteinheiten (1, 3) in den beiden Systemen verbunden ist.

8. Vorrichtung nach Anspruch 1,
**dadurch gekennzeichnet, dass** die Verknüpfung der beiden Systeme so ausgebildet ist, dass ein im zweiten System ermitteltes Datum über einen Betriebszustand des Fahrzeugs im ersten System eine sich daraus ergebende, im funktionellen oder logischen Zusammenhang stehende Beeinflussung oder Anzeige für die Navigation auslöst.

9. Vorrichtung nach Anspruch 1,
**dadurch gekennzeichnet, dass** die Verknüpfung der beiden Systeme so ausgebildet ist, dass ein im ersten System ermittelter Zustand betreffend die Navigation automatisch im zweiten System eine sich daraus ergebende, notwendige oder zweckmäßige Maßnahme für den technischen Betriebszustand des Fahrzeugs auslöst.

10. Vorrichtung nach einem der vorhergehenden Ansprüche,
**dadurch gekennzeichnet, dass** der Geber (4) als ein Geber für die Fahrzeuggeschwindigkeit (VF) für die Tankfüllung (TF) oder für die Fahrstrecke (FS) ausgebildet ist.

## Claims

1. Apparatus for controlling and monitoring a vehicle having a first system and having at least one second system, in each case for evaluation of data, with the first system including an evaluation unit for navigation (1), and the second system including an evaluation unit for vehicle functions (3),
**characterized in that**
the systems are linked to one another such that the data which is supplied from a single sensor (4) is evaluated for different purposes in both systems.

2. Apparatus according to Claim 1,
**characterized in that** data which is evaluated both in the first system and in the second system is supplied from the sensor (4) to an evaluation unit (1) in the first system, and to an evaluation unit (3) in the second system.

3. Apparatus according to Claim 1,
**characterized in that** data which relates to technical operating states of the vehicle and is evaluated per se only in the second system is additionally supplied to an evaluation unit (1) in the first system, where it initiates functions for position determination and/or navigation assistance.

4. Apparatus according to Claim 1,
**characterized in that** data which relates to radio driver information for position determination and/or navigation assistance and is evaluated per se only in the first system is additionally supplied to an evaluation unit (3) in the second system, where it initiates functions for technical operating states of the vehicle.

5. Apparatus according to Claim 3 or 4,
**characterized by** a visual display for displaying the evaluated data.

6. Apparatus according to Claim 2, 3 or 4,
**characterized in that** the sensor (4) is connected to a data evaluation unit (3) in one of the systems, and an output (which carries this data) of the evaluation unit (3) is connected to a data evaluation unit (1) in the other system.

7. Apparatus according to Claim 2, 3 or 4,
**characterized in that** the sensor (4) is connected in parallel to the inputs of two data evaluation units (1, 3) in the two systems.

8. Apparatus according to Claim 1,
**characterized in that** the link between the two systems is designed such that a data item which is determined in the second system and relates to an operating state of the vehicle in the first system initiates an influence or navigation display which results from this and is functionally or logically related.

9. Apparatus according to Claim 1,
**characterized in that** the link between the two systems is designed such that a state which is determined in the first system relating to navigation automatically initiates a measure in the second system which results from this and is necessary or expedient, for the technical operating state of the vehicle.

10. Apparatus according to one of the preceding claims,
**characterized in that** the sensor (4) is in the form of a sensor for the vehicle speed (VF) for refuelling (TF) or for the route travelled (FS).

## Revendications

1. Dispositif de commande et de surveillance d'un véhicule, comprenant un premier système et au moins un deuxième système respectivement pour exploiter des données, le premier système contenant une unité d'exploitation pour une navigation (1) et le deuxième système une unité d'exploitation pour des fonctions de véhicule (3),
**caractérisé en ce que**
les systèmes sont combinés l'un à l'autre de telle sorte que les données fournies par un capteur distinct (4) sont exploitées dans les deux systèmes pour des usages différents.

2. Dispositif selon la revendication 1,
**caractérisé en ce que**
des données utilisées aussi bien dans le premier système que dans le deuxième système sont amenées par le capteur (4) vers une unité d'exploitation (1) dans le premier système et une unité d'exploitation (3) dans le deuxième système.

3. Dispositif selon la revendication 1,
**caractérisé en ce que**
des données concernant les états de fonctionnement techniques du véhicule et qui normalement ne sont exploitées que dans le deuxième système, sont également amenées vers une unité d'exploitation (1) dans le premier système pour y déclencher des fonctions de localisation et/ou d'aide à la navigation.

4. Dispositif selon la revendication 1,
**caractérisé en ce que**
des données concernant des informations radio du conducteur pour une localisation et/ou une aide à la navigation et qui ne sont normalement exploitées que dans le premier système, sont également amenées vers une unité d'exploitation (3) dans le deuxième système pour y déclencher des fonctions pour les états de fonctionnement techniques du véhicule.

5. Dispositif selon la revendication 3 ou 4,
**caractérisé par**
un affichage optique pour afficher les données exploitées.

6. Dispositif selon la revendication 2, 3 ou 4,
**caractérisé en ce que**
le capteur (4) est relié à une unité d'exploitation de données (3) dans l'un des systèmes, et une sortie de cette unité d'exploitation (3) exécutant la donnée est reliée à une unité d'exploitation de données (1) dans l'autre système.

7. Dispositif selon la revendication 2, 3 ou 4,
**caractérisé en ce que**
le capteur (4) est relié en parallèle aux entrées de deux unités d'exploitation de données (1, 3) dans les deux systèmes.

8. Dispositif selon la revendication 1,
**caractérisé en ce que**
la combinaison des deux systèmes est telle qu'une donnée concernant un état de fonctionnement du véhicule déterminée dans le deuxième système déclenche dans le premier système pour la navigation en résultant une influence ou une indication en relation fonctionnelle ou logique.

9. Dispositif selon la revendication 1,
**caractérisé en ce que**
la combinaison des deux systèmes est telle qu'un état concernant la navigation déterminé dans le premier système déclenche dans le deuxième système automatiquement une mesure en résultant, nécessaire ou utile, pour l'état de fonctionnement technique du véhicule.

10. Dispositif selon l'une quelconque des revendications précédentes,
**caractérisé en ce que**
le capteur (4) est un capteur de vitesse du véhicule (VF), de remplissage du réservoir (TF) ou de trajet à parcourir (FS).
